# EUROPEAN PATENT SPECIFICATION

(11) **EP 3 510 006 B1**
(45) Date of publication and mention of the grant of the patent: **25.10.2023**
(21) Application number: 17781154.4
(22) Date of filing: 06.09.2017
(51) Int. Cl.: C05F 7/00, C02F 1/44, C02F 9/00, C05F 3/00

(54) **PROCESS AND APPARATUS FOR TREATING MANURE SLUDGE**
VERFAHREN UND VORRICHTUNG ZUR BEHANDLUNG VON DUNGSCHLAMM
PROCÉDÉ ET APPAREIL DE TRAITEMENT DE PURIN

(30) Priority: 07.09.2016 FI 20165667
(43) Date of publication of application: 17.07.2019
(73) Proprietor: Valio Ltd, 00370 Helsinki (FI)
(72) Inventor: PARTONEN, Antti-Pekka, 00370 Helsinki (FI); HEINO, Antti, 00370 Helsinki (FI); KALLIOINEN, Harri, 00370 Helsinki (FI)
(74) Representative: Kolster Oy Ab
(86) International application number: PCT/FI2017/050629
(87) International publication number: WO 2018/046799

(56) References cited:
- EP-A1- 1 757 562
- EP-A1- 2 390 235
- WO-A1-01/87467

## Description

### FIELD OF THE INVENTION

The present invention relates to agricultural and separation technologies. More particularly, the invention relates to treatment of manure sludge by means of separation technologies.

### BACKGROUND OF THE INVENTION

Today's milk production and animal rearing are highly centralized. Thus, animal farms increase in size and large amounts of manure sludge are generated locally. A large manure sludge amount results in logistic problems as the manure must be spread over a large field area within a short period of time. Manure must then be transported over long distances, which incurs costs. Further, significant investments are required in spreading equipment. As animal farms increase in size, rationalizing the treatment of manure sludge is more important than ever. The size of present manure sludge containers is about 1000 to 8 000 m³, which means that there is a great need for dewatering, or concentration, manure sludge.

Spreading of manure sludge onto fields is nowadays restricted by the high phosphorous content of the manure. Hence, even for ecological reasons, there is a need for developing the treatment of manure sludge further to allow manure sludge and its valuable components to be utilized in a more efficient manner than before.

FI patent application 20126072 discloses a process for treating manure sludge wherein homogenous manure sludge is subjected to microfiltration, and the obtained microfiltration permeate is concentrated in one or more reverse osmosis step. Other processes to treat manure are known from WO 01/87467A1 or EP 1 757 562 A1 for example. European Patent application EP 2 390 235 A1 discloses a process for treating digestate from anaerobic fermentation to obtain water and a fertilizer.

Nutrient recirculation, prevention of eutrophication of water system and so-called bioeconomy are topic issues worldwide.

We have now found an enhanced process for treating manure sludge wherein the manure is efficiently dewatered and the nutrients are efficiently separated into different fractions.

### BRIEF DESCRIPTION OF THE INVENTION

An object of the present invention is to provide a method for treating manure sludge comprising the steps of:
a) providing manure sludge,
b) subjecting the manure sludge to separation to provide a first dry fraction and a first liquid fraction,
c) subjecting the first liquid fraction to a centrifugation step to provide a second dry fraction and a second liquid fraction,
d) subjecting the second liquid fraction to one or more sequential reverse osmosis (RO) filtration steps to provide one or more RO retentates and one or more RO permeates, wherein the feed for each subsequent RO filtration step is an RO permeate obtained from the previous RO filtration step.

The present invention provides an efficient method for separating water and solid matter of manure sludge. An advantage of concentration of manure sludge is that transportation of water is reduced. This again reduces transportation and spreading costs, decreases the compaction of arable land and makes it possible to utilize the manure nutrients more efficiently.

The invention further provides a method in which nutrients, such as phosphorus, nitrogen and potassium present in manure sludge, are efficiently separated into different fractions. In the method, phosphorus is mainly retained in the dry fractions obtained in the method while nitrogen and potassium are fairly uniformly divided between the dry and liquid fractions. This enables optimal use of the various fractions obtained in the method in an appropriate manner.

The invention further provides a method which produces a high amount of a water fraction with ultimately low chemical oxygen demand (COD) and low nitrogen, potassium and phosphorus contents.

The invention still further provides a method which produces a liquid fraction which contains a high amount of nitrogen but is substantially free of phosphorus.

An advantage of the invention is also that the spreading of manure sludge is enhanced, since nutrient-containing fractions can be more efficiently spread compared with untreated manure sludge. Further, there are economic and environmental advantages, including savings in spreading costs, more accurate dosing of certain nutrient in fertilization, better nutrient response, no need of adjunct spreading area required by the regulatory issues, and less manure storage.

Another object of the invention is to provide an apparatus for treating manure sludge comprising
- a separator unit for separating manure sludge to a dry fraction and a first liquid fraction,
- one or more centrifuges for removing solid matter from the first liquid fraction to provide a second liquid fraction,
- one or more reverse osmosis units for concentrating the second liquid fraction.

### BRIEF DESCRIPTION OF THE DRAWINGS

Figure 1 shows an embodiment of the method of the invention;
Figure 2 shows an embodiment of the method of the invention and illustrates the circulation of various fractions obtained in the method;
Figure 3 shows an embodiment of the apparatus of the invention.

### DETAILED DESCRIPTION OF THE INVENTION

An object of the present invention is to provide a method for treating manure sludge comprising the steps of:
a) providing manure sludge,
b) subjecting the manure sludge to separation to provide a first dry fraction and a first liquid fraction,
c) subjecting the first liquid fraction to a centrifugation step to provide a second dry fraction and a second liquid fraction,
d) subjecting the second liquid fraction to one or more sequential reverse osmosis (RO) filtration steps to provide one or more RO retentates and one or more RO permeates, wherein the feed for each subsequent RO filtration step is an RO permeate obtained from the previous RO filtration step.

The manure sludge used in the method of the invention can be derived from any animal. Typically, manure sludge is derived from cattle or pigs.

In the method of the invention, the manure sludge is typically treated at its natural temperature. If appropriate, the method can comprise a heating step or a cooling step at any stage during the method in order to enhance the separation of the nutrients.

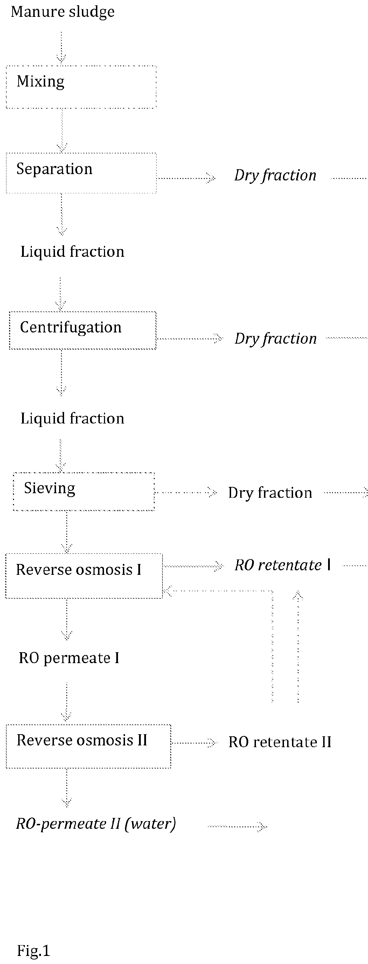

Figure 1 illustrates an embodiment of the method of the invention. In this embodiment, two reverse osmosis filtration steps are involved. The dashed lines indicate optional embodiments of the invention. The fractions typed in italic letters represent final products which can be used as a ready-to-use nutrient-containing preparations as fertilizers, for example.

The dry matter content of manure sludge to be treated is typically in the range of about 1 wt% to about 15 wt%. As used herein, the term "dry matter content" is meant to include the contents of both soluble and insoluble solids. The chemical oxygen demand of manure sludge is typically >15000 mg Oz/L. Nitrogen, phosphorus and potassium in the manure sludge are typically present in a ratio of N:P:K of 3-10:1:3-10. In an embodiment, N:P:K is 4.6:1:4.4.

In the method, the manure sludge is subjected to a separation step to remove the coarsest solids from the sludge. Any device which provides separation of solid matter from liquid can be used. For example, separation can be carried out by filtering, centrifugation, sieving optionally using pressure, or with mechanical separators, including drum filter, screw press or disc filter. Separation can also be carried out by pressing the manure through gauze. In an embodiment, the separation is carried out with a screw press. In another embodiment, the separation is carried out with a decanter centrifuge.

Separation step b) provides about 15 wt% to about 35 wt% of a dry fraction, i.e. a first dry fraction, and about 65 wt% to about 85 wt% of a liquid fraction, i.e. a first liquid fraction. In an embodiment, the dry matter content of the dry fraction is about 15 wt% to about 35 wt%. In another embodiment, the dry matter content of the dry fraction is in the range of about 15 wt% to about 30 wt%. In a further embodiment, the dry matter content of the dry fraction is in the range of about 18 wt% to about 25 wt%. In a still further embodiment, the dry matter content of the dry fraction is about 20 wt%. In an embodiment, the dry matter content of the dry fraction is about 23 wt%. N:P:K ratio of the dry fraction is in the range of 2-4:1:1-2. In an embodiment, N:P:K ratio is 3-4:1:1-2. In another embodiment, N:P:K ratio is 3.7:1:1.6.

The dry fraction obtained from the separation is a ready-to-use nutrient-containing fraction which can be spread onto the soil.

The dry matter content of the liquid fraction obtained from the above separation is in the range of about 0.5 wt% to about 7 wt%. In an embodiment, the dry matter content is in the range of about 0.5 wt% to about 5 wt%. In another embodiment, the dry matter content is in the range of about 0.5 wt% to about 2 wt%. In a further embodiment, the dry matter content is in the range of about 1.5 wt% to about 5 wt%. In a still further embodiment, the dry matter content of the liquid fraction is in the range of about 1.5 wt% to about 2 wt%.

Separation step b) can be enhanced by washing whereby the transfer of soluble dry matter minerals and/or nutrients to the liquid fraction is increased. Washing can be carried out by using one or more liquid fractions which are obtained in subsequent steps of the method of the invention.

In addition to washing or alternatively, additives can be added in the separation step to enhance the separation of solid matter, minerals and/or nutrients.

Prior to the separation step, manure sludge can be mixed to provide mixed manure sludge. Mixing of the manure sludge provides more stable operating conditions during the process. Any mixing device is suitable which produces a fairly homogenous mass of manure sludge, which is further led to the separation step.

The first liquid fraction derived from separation step b) is led to centrifugation step c) to dewater the liquid fraction. The term "centrifugation" optionally employed in the separation step b) to provide a first dry fraction and a first liquid fraction, as well as that employed in step c) to dewater the first liquid fraction means herein a process using a device, that is to say a centrifuge, which employs a high rotational speed to separate components of different densities. In an embodiment, the drum speed of the centrifuge is in the range of 2000 to 5000 rpm. In another embodiment, the differential speed of the centrifuge is in the range of 0 to 20 rpm. In an embodiment, the centrifugation is carried out with a decanter centrifuge. Dewatering chemical(s) can be added to the liquid fraction before centrifugation to increase the dewatering capacity of the centrifuge and to enhance the separation of at least one of solid matter, minerals and nutrients, such as phosphorus from the liquid fraction. Suitable dewatering chemicals include, but are not limited to, metal salt coagulants, such as ferric sulphate, and cationic, anionic or nonionic flocculation polymers. The above dewatering chemicals can also be used in various combinations. In an embodiment, metal salts coagulants are added in an amount of 0.01 to 5.0 kg/kg total solids of the manure sludge. In another embodiment, the cationic, anionic or nonionic flocculation polymers are added in an amount of 0.01 to 5.0 kg/kg total solids of the manure sludge, optionally including the metal salts coagulants. Dynamic or static mixers can be used to enhance the mixing of the liquid fraction and the chemical(s).

Centrifugation carried out in step c), and optionally carried out in step b), may comprise one or more sequential centrifugation steps. In an embodiment, only two sequential centrifugation steps (a first centrifugation step and a second centrifugation step) are involved in the method of the invention. When two centrifugation steps are involved, the liquid fraction of the first centrifugation step is subjected to the second centrifugation step. In an embodiment, the first centrifugation step is carried out in step b), and the second centrifugation step is carried out in step c). Both sequential centrifugation steps may be carried out with a decanter centrifuge.

In an embodiment of the method, separation step b) is carried out with a screw press and centrifugation step c) is carried out by a single centrifugation step. In another embodiment of the invention, both separation step b) and centrifugation step c) are carried out by a single centrifugation step.

Centrifugation step c) of the liquid fraction derived from the separation provides about 10 wt% to about 20 wt% of a dry fraction, i.e. a second dry fraction, and about 80 wt% to about 90 wt% of a liquid fraction, i.e. a second liquid fraction, based on the feed subjected to centrifugation. The amount of the dry fraction from the centrifugation step corresponds to about 5 wt% to about 15 wt% based on the total amount of starting manure sludge.

In an embodiment, the dry matter content of the dry fraction obtained from centrifugation step c) is in the range of about 15 wt% to about 25 wt%. In another embodiment, the dry matter content of the dry fraction is in the range of about 17 wt% to about 23 wt%. In a further embodiment, the dry matter content of the dry fraction is about 18 wt%. N:P:K ratio of the dry fraction is in the range of 1-4:1-2:1. In an embodiment, N:P:K ratio of the dry fraction is in the range of 1-3:1-2:1. In an embodiment, N:P:K ratio is 3.1:1.5:1.

In total, over 75 wt%, specifically over 90 wt%, and more specifically over 99 wt% of phosphorus present in the manure sludge is recovered in the overall dry fractions, i.e. in the first and in the second dry fraction obtained from step b) and in step c), respectively.

The dry fraction obtained from centrifugation step c) is a ready-to-use nutrient-containing fraction which can be spread onto the soil. This dry fraction can be mixed with the dry fraction obtained from the previous separation step.

The dry matter content of the liquid fraction obtained from centrifugation step c) is in the range of about 0.1 wt% to about 5 wt%. In an embodiment, the dry matter content is in the range of about 0.1 wt% to about 3 wt%. In another embodiment, the dry matter content is in the range of about 0.1 wt% to about 2 wt%. In a further embodiment, the dry matter content is in the range of about 0.1 wt% to about 1 wt%.

The liquid fraction obtained from centrifugation step c) is further subjected to one or more sequential reverse osmosis (RO) filtrations to still remove dry matter from the liquid fraction and to lower the COD value thereof. When a plurality of RO filtration steps are carried out, in each filtration step the feed is the permeate fraction obtained from the previous RO filtration step.

Before the liquid fraction from the centrifugation is subjected to one or more RO filtrations, this fraction can be led through a sieve with a mesh size of 10-500 µm to remove solid matter from the liquid fraction.

In the reverse osmosis plant, the liquid from centrifugation step c), optionally sieved, is concentrated while water is removed. Reverse osmosis provides a retentate, that is a concentrate, which is a fraction retained above the membrane, and a permeate which is a fraction passed through the membrane. The reverse osmosis filtration concentrates the nutrients which are mainly nitrogen and potassium to the retentate fraction. It is thus highly desirable to finally obtain a permeate fraction which is substantially free of dry matter and nutrients and is mainly pure water. The removal of nutrients of the liquid fraction obtained from the centrifugation and the production of pure water as an RO permeate are enhanced using more than one RO filtration step.

In the first RO filtration step, a volume concentration factor (VCF) of 5 to 15 is used. In the subsequent RO filtration steps, VCF of 10 to 80 is used. In an embodiment, the VCF is 50 in said further RO filtration steps.

RO filtration provides a liquid retentate that can be used, e.g. as a liquid fertilizer.

In an embodiment, the liquid fraction obtained from centrifugation step c) is subjected as a feed to two successive RO filtration steps wherein the permeate obtained from the first RO filtration is subjected to a second RO filtration. The retentate from the second and subsequent RO filtration steps are either fed to the first RO filtration step together with the liquid fraction feed, or mixed with the retentate obtained in the first RO filtration step. In an embodiment, the dry matter content of the retentate obtained after the first RO filtration steps, optionally including one or more retentates derived from the subsequent RO filtration steps, is in the range of about 1 wt% to about 15 wt%. In another embodiment, the dry matter content is in the range of about 1 wt% to about 10 wt%. In a further embodiment, the dry matter content is in the range of about 2 wt% to about 7 wt%. In a still further embodiment, the dry matter content is about 5 wt%.

In an embodiment, the N:P:K ratio of the retentate obtained after the first RO filtration step, optionally including one or more retentates derived from the subsequent RO filtration steps, is in the range of 1-2:0:1-2. In another embodiment, the N:P:K ratio of the retentate is in the range of 1:0:1-2. In a further embodiment, N:P:K ratio is 1:0:1.3.

The dry matter content of the permeate after one or more RO filtration steps is ≤0.5 wt%. The permeate is mainly water. In an embodiment, the COD (Chemical Oxygen Demand) of this permeate is ≤500mg Oz/L. In another embodiment, the COD is ≤150mg Oz/L. In a further embodiment, the COD is ≤15 mg Oz/L. In the present invention, the Chemical Oxygen Demand was measured according to ISO 15705:2002.

N:P:K ratio of the permeate derived from one or more RO filtration steps is 1-2:0:1. In an embodiment, N:P:K ratio is 1.3:0:1. The initial feed for the RO step, that is the liquid fraction from the centrifugation, is divided in the one or more RO filtration steps so that about 10 wt% of retentate and about 90 wt% of permeate are formed.

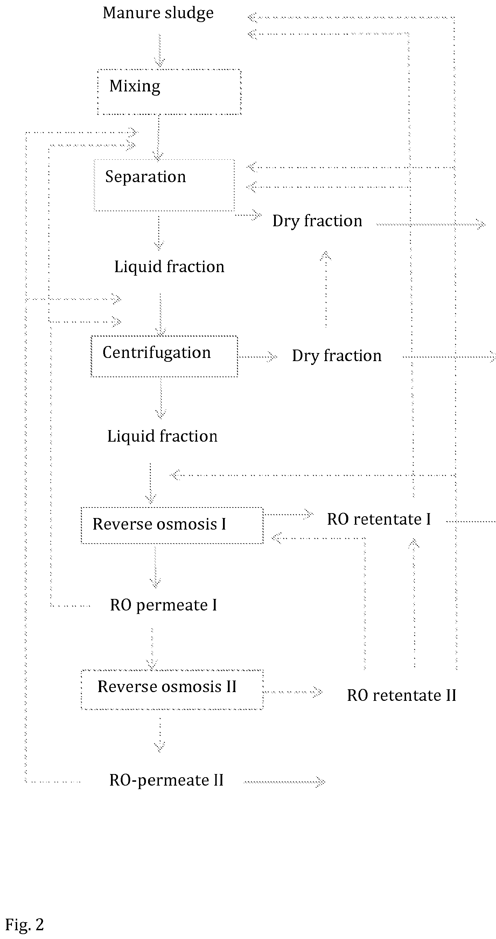

The circulation of the various fractions obtained in the method of the invention is illustrated in Figure 2. The dashed lines indicate optional embodiments of the invention. For example, the dry fractions from the separation and centrifugation can be mixed and spread like dry manure onto the soil as a dry fertilizer, or digested anaerobically or aerobically. Anaerobic digestion produces biogas which can be used to generate electrical power and heat for the method of the invention lowering the operating cost. The dry fraction obtained from anaerobic digestion can be spread like dry manure.

The method of the invention described above, including one or more successive RO filtration steps, reduces the total amount of the nutrient rich fraction down to about 30 wt% from the original amount while up to about 70 wt% is processed into pure water. For example, when 10 000 kg of manure sludge is processed, 3 100 kg of dry manure (31 wt%) from the separation and centrifugation steps together, 700 kg of liquid fertilizer (7 wt%) obtained as a retentate from reverse osmosis and 6 200 kg of pure water (62 wt%) obtained as a permeate after two reverse osmosis steps are produced. This outcome is however indicative and can vary depending on the composition of the manure sludge and the pursued compositions of the various fractions obtained in the method. Furthermore, the use of dewatering chemicals described above has an effect on the overall result achieved by the method.

Typical percentages by weight of the various fractions obtained from manure sludge by the method of the invention are described in Table 1 below. The proportions of the various fractions and dry matter contents thereof vary with the composition of the manure sludge. "1^{st} dry fraction" means a dry fraction derived from the separation step. "2^{nd} dry fraction" means a dry fraction derived from the centrifugation step. "RO permeate" describes a permeate fraction derived from one or more successive reverse osmosis filtration steps. "RO retentate" describes the retentate derived from the first reverse osmosis filtration step. Combination of the first RO retentate with one or more further RO retentates obtained from the subsequent RO filtration steps does not significantly change the numerical values given for "RO retentate".

**Table 1**

| | Manure sludge | 1^{st} dry fraction | 2^{nd} dry fraction | RO retentate | RO permeate |
|---|---|---|---|---|---|
| Proportion (wt%) | 100 | 15-35 | 5-15 | 5-15 | 50-75 |
| Dry matter (wt%) | 1-15 | 15-35 | 15-25 | 1-15 | <0.5 |
| COD (mg O₂/L) | >15000 | - | - | - | ≤15 |
| N:P:K ratio | 3-10:1:3-10 | 2-4:1:1-2 | 1-3:1-2:1 | 1:0:1-2 | 1-2:0:1 |

Table 1 shows that phosphorus is extensively recovered in the dry fractions, especially in the second dry fraction. Nitrogen and potassium are fairly uniformly divided between the liquid and dry fractions. Nitrogen and potassium are then concentrated from the liquid fraction by reverse osmosis into an RO retentate.

The method of the invention can be a continuous process or a batch process.

The fractions obtained in the method of the invention can be used as such as nutrient compositions. The fractions can also be arbitrary combined to provide formulations having desired nutrient compositions. For example, the dry fractions from the separation and centrifugation can be employed as a nutrient composition, as a soil conditioner, or as an energy source or for composting. The permeate fraction obtained from reverse osmosis filtration(s) is substantially free of dry matter and is mainly pure water with very low COD and nutrient content. The permeate fraction(s) can be led to the nature, or used as irrigation or flushing water, or as animal drinking water. The permeate can also be further purified in a water treatment plant, if appropriate. The concentrate(s) obtained from reverse osmosis filtration(s) can be used as a liquid fertilizer or further treated, for example, by evaporation or ammonia stripping.

Another object of the invention is to provide an apparatus for treating manure sludge comprising
- a separator unit for separating manure sludge to a dry fraction and a first liquid fraction,
- one or more centrifuges for removing solid matter from the first liquid fraction to provide a second liquid fraction,
- one or more reverse osmosis units for concentrating the second liquid fraction.

The apparatus of the invention is suitable for implementing the method of the invention.

In an embodiment, the apparatus comprises means for implementing the method described above.

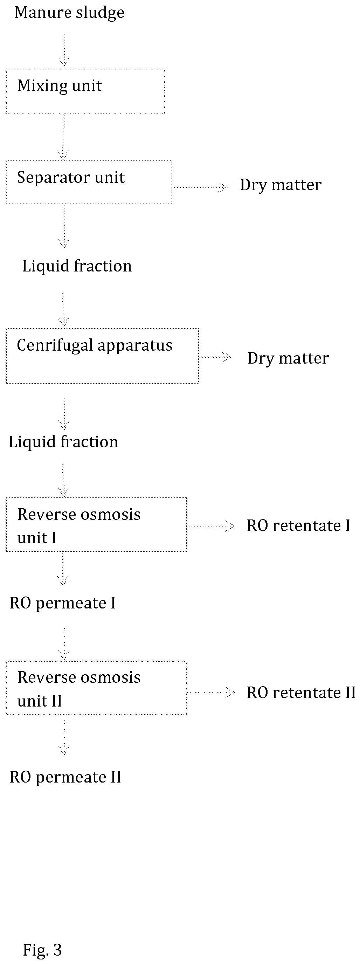

An embodiment of the apparatus of the invention is illustrated in Fig. 3, including one reverse osmosis unit, and an optional second reverse osmosis unit. The dashed lines indicate optional embodiments of the invention. In an embodiment, the apparatus includes two reverse osmosis units.

In an embodiment, the separator unit is selected from at least one of the following: a filter, such as drum filter or disc filter, centrifuge, sieve, and screw press. The separator unit can include one or more of the above devices. In an embodiment, the separator unit is a decanter centrifuge.

In an embodiment, the apparatus comprises only one centrifuge for removing solid matter from the first liquid fraction. In an embodiment, the one centrifuge is a decanter centrifuge.

In an embodiment, the apparatus comprises only a screw press as the separator unit and only one centrifuge for removing solid matter from the first liquid fraction. In another embodiment, the apparatus comprises only a centrifuge as the separator unit and only one centrifuge for removing solid matter from the first liquid fraction.

In an embodiment, the apparatus comprises a mixing unit upstream from the separator unit to provide fairly homogenous manure sludge.

In an embodiment, the apparatus comprises a sieve with a mesh size of 10-500 µm for removing solid matter from the second liquid fraction before concentrating the second liquid fraction.

The apparatus can be arranged onto a transportable base, such as a trailer, or can be constructed as a stationary plant. The capacity of the transportable unit can be for example 100 m³/h. An advantage of transportable unit is that the apparatus can be transferred between farms whereby need for stationary plants for manure sludge treatment in farms is reduced. The transportable unit can be used without external electrical power and water source. The transportable unit thus provides a cost-effective and ecological alternative.

The capacity of the stationary plant can vary from a few to thousands of cubic meters per hour. Manure sludge can be transported to the stationary plant by tankers or by pressure sewer.

The following examples are presented for further illustration of the invention without limiting the invention thereto.

### Example 1

1000 m³ of well mixed liquid cow manure sludge having a dry matter (DM) content of 8 wt% was processed by a screw press (EYS SP600, mesh size: 0.5 mm) which resulted in two fractions: 250 metric tons of a dry fraction ("1^{st} dry fraction"; DM 23 wt%) and 750 m³ of a liquid fraction (DM 3 wt%).

The liquid fraction was pumped to a decanter centrifuge (Andritz Separation, model D5L, drum speed: 3200 rpm, differential speed: 3.9 rpm, torque: 55 wt%, pond depth: 272 mm) which further removed suspended solids. Processing by the decanter centrifuge resulted in two fractions: 760 m³ of a liquid fraction and 85 metric tons of a dry fraction ("2^{nd} dry fraction"). After centrifugation, the dry matter contents of the liquid fraction and the dry fraction were <1 wt% and 18 wt%, respectively.

After centrifugation, the liquid fraction was pumped through a metal sieve with mesh size of 80 µm to remove biggest particles.

After sieving, the resultant liquid was pumped to a reverse osmosis (RO) plant (DOW Filmtec SW30 membranes). In the RO, a volume concentration factor of 10 was used which produced 76 m³ of retentate ("Liquid concentrate") and 684 m³ of permeate. DM contents of these fractions were 10 wt% and <0.1 wt%, respectively.

To further purify the RO permeate, it was re-filtrated in the RO plant (DOW Filmtec SW30 membranes) with a volume concentration factor of 50 which resulted again in two fractions: 14 m³ of retentate and 670 m³ of permeate ("Purified water"). DM content of the retentate and that of the permeate were 5 wt% and <0.1 wt%, respectively.

Compositions of the fractions obtained above are shown in Table 2. Percentage values are given on weight basis and calculated from total input amount.

**Table 2**

| | Manure sludge | 1^{st} dry fraction | 2^{nd} dry fraction | Liquid concentrate | Purified water |
|---|---|---|---|---|---|
| Proportion (wt%) | 100 | 22 | 9 | 7 | 62 |
| Dry matter (wt%) | 8 | 23 | 18 | 10 | <0.1 |
| Total nitrogen (mg/kg) | 3500 | 4800 | 7400 | 14700 | 5 |
| Total phosphorus (mg/kg) | 760 | 1300 | 3500 | 20 | 0 |
| Total potassium (mg/kg) | 3300 | 2100 | 2400 | 19600 | 4 |
| N:P:K ratio | 4.6:1:4.4 | 3.7:1:1.6 | 3.1:1.5:1 | 1:0:1.3 | 1.3:0:1 |
| COD mg OzjL | >20 000 | - | - | - | 15 |

### Example 2

1000 m³ of well mixed liquid cow manure sludge having a dry matter (DM) content of 8wt% was processed by a decanter centrifuge (Andritz Separation, model D5L, drum speed: 3200 rpm, differential speed: 10 rpm, torque: 70 wt%, pond depth: 272 mm) which resulted in two fractions: 225 metric tons of a dry fraction ("1^{st} dry fraction"; DM 25 wt%) and 775 m³ of a liquid fraction (DM 3 wt%).

The liquid fraction was pumped to a decanter centrifuge (Andritz Separation, model D5L, drum speed: 3200 rpm, differential speed: 3.9 rpm, torque: 55 wt%, pond depth: 272 mm) which further removed suspended solids. Processing by the decanter centrifuge resulted in a dry fraction and a liquid fraction: 695 m³ of a liquid fraction and 80 metric tons of a dry fraction ("2^{nd} dry fraction"). After centrifugation, the dry matter contents of the liquid fraction and the dry fraction were 0.5 wt% and 25 wt%, respectively.

The liquid from the centrifugation was pumped to a reverse osmosis (RO) plant (DOW Filmtec SW30 membranes). In the RO, a volume concentration factor of 10 was used which produced 70 m³ of retentate ("Liquid concentrate") and 625 m³ of permeate. DM contents of these fractions were 10 wt% and <0.1 wt%, respectively.

To further purify the RO permeate, it was re-filtrated in the RO plant (DOW Filmtec SW30 membranes) with a volume concentration factor of 50 which resulted again in two fractions: 12 m³ of retentate and 613 m³ of permeate ("Purified water"). DM content of the retentate and that of the permeate were 5 wt% and <0.1 wt%, respectively.

Compositions of the fractions obtained above are shown in Table 3. Percentage values are given on weight basis and calculated from total input amount.

**Table 3**

| | Manure sludge | 1^{st} dry fraction | 2^{nd} dry fraction | Liquid concentrate | Purified water |
|---|---|---|---|---|---|
| Proportion (wt%) | 100 | 23 | 8 | 7 | 62 |
| Dry matter (wt%) | 8 | 25 | 25 | 10 | <0.1 |
| Total nitrogen (mg/kg) | 3500 | 4800 | 7400 | 14700 | 5 |
| Total phosphorus (mg/kg) | 760 | 1300 | 3500 | 20 | 0 |
| Total potassium (mg/kg) | 3300 | 2100 | 2400 | 19600 | 4 |
| N:P:K ratio | 4.6:1:4.4 | 3.7:1:1.6 | 3.1:1.5:1 | 1:0:1.3 | 1.3:0:1 |
| COD mg Oz/L | >20 000 | - | - | - | 15 |

It will be obvious to a person skilled in the art that, as the technology advances, the inventive concept can be implemented in various ways. The invention and its embodiments are not limited to the examples described above but may vary within the scope of the claims.

## Claims

1. A method for treating manure sludge comprising the steps of:
a) providing manure sludge,
b) subjecting the manure sludge to separation to provide a first dry fraction and a first liquid fraction,
c) subjecting the first liquid fraction to a centrifugation step to provide a second dry fraction and a second liquid fraction,
d) subjecting the second liquid fraction to one or more sequential reverse osmosis (RO) filtration steps to provide one or more RO retentates and one or more RO permeates, wherein the feed for each subsequent RO filtration step is an RO permeate obtained from the previous RO filtration step.

2. The method of claim 1, wherein separation b) is carried out with a screw press or by centrifugation, such as with a decanter centrifuge.

3. The method of claim 1 or 2, wherein centrifugation step c) is carried out with a decanter centrifuge.

4. The method of claim 2 or 3, wherein the drum speed of the decanter centrifuge is in the range of 2000 to 5000 rpm.

5. The method of any one of claims 2 to 4, wherein the differential speed of the decanter centrifuge is in the range of 0 to 20 rpm.

6. The method of any one of claims 2 to 5, wherein the centrifugation step c) comprises one or more sequential centrifugation steps, specifically one centrifugation step.

7. The method of any one of claims 2 to 6, wherein separation b) is carried out with a screw press and centrifugation step c) is carried out by a single centrifugation step.

8. The method of any one of claims 2 to 6, wherein both separation step b) and centrifugation step c) are carried out by a centrifugation step.

9. The method of any one of the preceding claims, comprising a step of mixing of the manure sludge prior to the separation step.

10. The method of any one of the preceding claims, wherein the dry matter content of the first dry fraction is in the range of about 15 wt% to about 35 wt%, specifically about 15 wt% to about 30 wt%, more specifically about 18 wt% to about 25 wt%, still more specifically about 20 wt%.

11. The method of any one of the preceding claims, wherein the dry matter content of the second dry fraction is in the range of about 15 wt% to about 25 wt%, specifically about 17 wt% to about 23 wt%, more specifically about 18 wt%.

12. The method of any one of the preceding claims, wherein two sequential RO filtration steps are involved, wherein the second liquid fraction is subjected to a first RO filtration step to provide a first RO retentate and a first RO permeate, and the first RO permeate is subjected to a second RO filtration steps to provide a second RO retentate and a second RO permeate.

13. The method of any one of the preceding claims, wherein the dry matter content of the retentate obtained from the first RO filtration step is in the range of about 1 wt% to about 15 wt%, specifically about 1 wt% to about 10 wt%, more specifically about 2 wt% to about 7 wt%, still more specifically about 5 wt%.

14. The method of any one of the preceding claims, wherein the dry matter content of the permeate obtained after one or more RO filtration steps is ≤0.5 wt%, specifically <0.1 wt%.

15. The method of any one of the preceding claims, wherein the COD of the permeate obtained after one or more RO filtration steps is ≤ 500mg O₂/L, specifically < 150mg Oz/L, more specifically ≤15 mg Oz/L.

16. The method of any one of preceding claims, wherein the N:P:K ratio of the permeate obtained after one or more RO filtration steps is 1-2:0:1.

17. Apparatus for treating manure sludge comprising means for implementing the method of any one of claims 1-16, wherein the means comprise
- a separator unit for separating manure sludge to a dry fraction and a first liquid fraction,
- one or more centrifuges configured to receive the first liquid fraction and to remove solid matter from the first liquid fraction to provide a second liquid fraction,
- one or more reverse osmosis units configured to receive the second liquid fraction and to concentrate the second liquid fraction.

18. The apparatus of claim 17, wherein the separator unit is selected from at least one of the following: a filter, such as drum filter or disc filter, centrifuge, sieve, and screw press, specifically a decanter centrifuge.

19. The apparatus of any one of claims 17-18, wherein the apparatus comprises only one centrifuge for removing solid matter from the first liquid fraction and the separator unit is a screw press.

20. The apparatus of any one of claims 17-18, wherein the apparatus comprises only one centrifuge for removing solid matter from the first liquid fraction and the separator unit is a centrifuge.

21. The apparatus of any one of claims 17-20, wherein the apparatus comprises a mixing unit upstream from the separator unit to provide fairly homogenous manure sludge.

22. The apparatus of any one of claims 17-21, wherein two reverse osmosis units are present.

23. The apparatus of any one of claims 17-22, which is arranged onto a transportable base, such as onto a trailer.

## Patentansprüche

1. Verfahren zur Behandlung von Gülleschlamm, umfassend die Schritte:
a) Bereitstellen von Gülleschlamm,
b) Unterziehen des Gülleschlamms einer Abscheidung, um eine erste trockene Fraktion und eine erste flüssige Fraktion bereitzustellen,
c) Unterziehen der ersten flüssigen Fraktion einem Zentrifugationsschritt, um eine zweite trockene Fraktion und eine zweite flüssige Fraktion bereitzustellen,
d) Unterziehen der zweiten flüssigen Fraktion einem oder mehreren aufeinanderfolgenden Umkehrosmose-Filtrationsschritten (UO-Filtrationsschritten), um ein oder mehrere UO-Retentate und ein oder mehrere UO-Permeate bereitzustellen, wobei die Beschickung für jeden aufeinanderfolgenden UO-Filtrationsschritt ein UO-Permeat ist, das aus dem vorherigen UO-Filtrationsschritt erhalten wird.

2. Verfahren nach Anspruch 1, wobei die Abscheidung b) mit einer Schraubenpresse oder durch Zentrifugation, wie mit einer Dekanterzentrifuge, durchgeführt wird.

3. Verfahren nach Anspruch 1 oder 2, wobei der Zentrifugationsschritt c) mit einer Dekanterzentrifuge durchgeführt wird.

4. Verfahren nach Anspruch 2 oder 3, wobei die Trommeldrehzahl der Dekanterzentrifuge im Bereich von 2000 bis 5000 U/min liegt.

5. Verfahren nach einem der Ansprüche 2 bis 4, wobei die Differenzdrehzahl der Dekanterzentrifuge im Bereich von 0 bis 20 U/min liegt.

6. Verfahren nach einem der Ansprüche 2 bis 5, wobei der Zentrifugationsschritt c) einen oder mehrere aufeinanderfolgende Zentrifugationsschritte, spezifisch einen Zentrifugationsschritt umfasst.

7. Verfahren nach einem der Ansprüche 2 bis 6, wobei die Abscheidung b) mit einer Schraubenpresse durchgeführt wird und der Zentrifugationsschritt c) durch einen einzigen Zentrifugationsschritt durchgeführt wird.

8. Verfahren nach einem der Ansprüche 2 bis 6, wobei sowohl der Abscheidungsschritt b) als auch der Zentrifugationsschritt c) durch einen Zentrifugationsschritt durchgeführt werden.

9. Verfahren nach einem der vorhergehenden Ansprüche, umfassend einen Schritt eines Mischens des Gülleschlamms vor dem Abscheidungsschritt.

10. Verfahren nach einem der vorhergehenden Ansprüche, wobei der Trockensubstanzgehalt der ersten trockenen Fraktion im Bereich von etwa 15 Gew.-% bis etwa 35 Gew.-%, spezifisch etwa 15 Gew.-% bis etwa 30 Gew.-%, spezifischer etwa 18 Gew.-% bis etwa 25 Gew.-% liegt, noch spezifischer etwa 20 Gew.-% beträgt.

11. Verfahren nach einem der vorhergehenden Ansprüche, wobei der Trockensubstanzgehalt der zweiten trockenen Fraktion im Bereich von etwa 15 Gew.-% bis etwa 25 Gew.-%, spezifisch etwa 17 Gew.-% bis etwa 23 Gew.-% liegt, spezifischer etwa 18 Gew.-% beträgt.

12. Verfahren nach einem der vorhergehenden Ansprüche, wobei zwei aufeinanderfolgende UO-Filtrationsschritte beinhaltet sind, wobei die zweite flüssige Fraktion einem ersten UO-Filtrationsschritt unterzogen wird, um ein erstes UO-Retentat und ein erstes UO-Permeat bereitzustellen, und das erste UO-Permeat einem zweiten UO-Filtrationsschritt unterzogen wird, um ein zweites UO-Retentat und ein zweites UO-Permeat bereitzustellen.

13. Verfahren nach einem der vorhergehenden Ansprüche, wobei der Trockensubstanzgehalt des Retentats, das aus dem ersten UO-Filtrationsschritt erhalten wird, im Bereich von etwa 1 Gew.-% bis etwa 15 Gew.-%, spezifisch etwa 1 Gew.-% bis etwa 10 Gew.-%, spezifischer etwa 2 Gew.-% bis etwa 7 Gew.-% liegt, noch spezifischer etwa 5 Gew.-% beträgt.

14. Verfahren nach einem der vorhergehenden Ansprüche, wobei der Trockensubstanzgehalt des Permeats, das nach einem oder mehreren UO-Filtrationsschritten erhalten wird, ≤ 0,5 Gew.-%, spezifisch ≤ 0,1 Gew.-% beträgt.

15. Verfahren nach einem der vorhergehenden Ansprüche, wobei der CSB des Permeats, das nach einem oder mehreren UO-Filtrationsschritten erhalten wird, ≤ 500 mg O₂/L, spezifisch ≤ 150 mg O₂/L, spezifischer ≤ 15 mg O₂/L beträgt.

16. Verfahren nach einem der vorhergehenden Ansprüche, wobei das N:P:K-Verhältnis des Permeats, das nach einem oder mehreren UO-Filtrationsschritten erhalten wird, 1-2:0:1 beträgt.

17. Vorrichtung zur Behandlung von Gülleschlamm, umfassend Mittel zum Implementieren des Verfahrens nach einem der Ansprüche 1-16, wobei die Mittel umfassen:
- eine Abscheider-Einheit zum Abscheiden von Gülleschlamm zu einer trockenen Fraktion und einer ersten flüssigen Fraktion,
- eine oder mehrere Zentrifugen, die dazu konfiguriert sind, die erste flüssige Fraktion aufzunehmen und Feststoffe aus der ersten flüssigen Fraktion abzuziehen, um eine zweite flüssige Fraktion bereitzustellen,
- eine oder mehrere Umkehrosmose-Einheiten, die dazu konfiguriert sind, die zweite flüssige Fraktion aufzunehmen und die zweite flüssige Fraktion zu konzentrieren.

18. Vorrichtung nach Anspruch 17, wobei die Abscheider-Einheit aus mindestens einem bzw. einer der folgenden ausgewählt ist: einem Filter, wie einem Trommelfilter oder Scheibenfilter, einer Zentrifuge, einem Sieb und einer Schraubenpresse, spezifisch einer Dekanterzentrifuge.

19. Vorrichtung nach einem der Ansprüche 17-18, wobei die Vorrichtung nur eine Zentrifuge zum Abziehen von Feststoffen aus der ersten flüssigen Fraktion umfasst und die Abscheider-Einheit eine Schraubenpresse ist.

20. Vorrichtung nach einem der Ansprüche 17-18, wobei die Vorrichtung nur eine Zentrifuge zum Abziehen von Feststoffen aus der ersten flüssigen Fraktion umfasst und die Abscheider-Einheit eine Zentrifuge ist.

21. Vorrichtung nach einem der Ansprüche 17-20, wobei die Vorrichtung eine Mischeinheit umfasst, die der Abscheider-Einheit nachgelagert ist, um einen ziemlich homogenen Gülleschlamm bereitzustellen.

22. Vorrichtung nach einem der Ansprüche 17-21, wobei zwei Umkehrosmose-Einheiten vorliegen.

23. Vorrichtung nach einem der Ansprüche 17-22, die auf einer transportierbaren Basis, wie auf einem Auflieger, eingerichtet ist.

## Revendications

1. Procédé pour traiter du lisier, comprenant les étapes de :
a) fourniture de lisier,
b) soumission du lisier à une séparation pour former une première fraction sèche et une première fraction liquide,
c) soumission de la première fraction liquide à une étape de centrifugation pour former une deuxième fraction sèche et une deuxième fraction liquide,
d) soumission de la deuxième fraction liquide à une ou plusieurs étapes successives de filtration par osmose inverse (RO) pour former un ou plusieurs rétentats de RO et un ou plusieurs perméats de RO, dans laquelle la charge pour chaque étape de filtration par RO subséquente est un perméat de RO obtenu dans l'étape de filtration par RO précédente.

2. Procédé selon la revendication 1, dans lequel la séparation b) est effectuée au moyen d'une presse à vis ou par centrifugation, comme au moyen d'une décanteuse centrifugeuse.

3. Procédé selon la revendication 1 ou 2, dans lequel l'étape de centrifugation c) est effectuée au moyen d'une décanteuse centrifugeuse.

4. Procédé selon la revendication 2 ou 3, dans lequel la vitesse de tambour de la décanteuse centrifugeuse est située dans la plage allant de 2000 à 5000 t/min.

5. Procédé selon l'une quelconque des revendications 2 à 4, dans lequel le différentiel de vitesse de la décanteuse centrifugeuse est situé dans la plage allant de 0 à 20 t/min.

6. Procédé selon l'une quelconque des revendications 2 à 5, dans lequel l'étape de centrifugation c) comprend une ou plusieurs étapes successives de centrifugation, spécifiquement une seule étape de centrifugation.

7. Procédé selon l'une quelconque des revendications 2 à 6, dans lequel la séparation b) est effectuée au moyen d'une presse à vis et l'étape de centrifugation c) est effectuée au moyen d'une seule étape de centrifugation.

8. Procédé selon l'une quelconque des revendications 2 à 6, dans lequel l'étape de séparation b) et l'étape de centrifugation c) sont toutes deux effectuées au moyen d'une étape de centrifugation.

9. Procédé selon l'une quelconque des revendications précédentes, comprenant une étape de mélange du lisier avant l'étape de séparation.

10. Procédé selon l'une quelconque des revendications précédentes, dans lequel la teneur en matières sèches de la première fraction sèche est située dans la plage allant d'environ 15 % en poids à environ 35 % en poids, spécifiquement d'environ 15 % en poids à environ 30 % en poids, plus spécifiquement d'environ 18 % en poids à environ 25 % en poids, encore plus spécifiquement d'environ 20 % en poids.

11. Procédé selon l'une quelconque des revendications précédentes, dans laquelle la teneur en matières sèches de la deuxième fraction sèche est située dans la plage allant d'environ 15 % en poids à environ 25 % en poids, spécifiquement d'environ 17 % en poids à environ 23 % en poids, plus spécifiquement d'environ 18 % en poids.

12. Procédé selon l'une quelconque des revendications précédentes, dans lequel deux étapes successives de filtration par RO sont mises en jeu, et dans lequel la deuxième fraction liquide est soumise à une première étape de filtration par RO pour former un premier rétentat de RO et un premier perméat de RO, et le premier perméat de RO est soumis à une deuxième étape de filtration par RO pour former un deuxième rétentat de RO et un deuxième perméat de RO.

13. Procédé selon l'une quelconque des revendications précédentes, dans lequel la teneur en matières sèches du rétentat obtenu à partir de la première étape de filtration par RO est située dans la plage allant d'environ 1 % en poids à environ 15 % en poids, spécifiquement d'environ 1 % en poids à environ 10 % en poids, plus spécifiquement d'environ 2 % en poids à environ 7 % en poids, encore plus spécifiquement d'environ 5 % en poids.

14. Procédé selon l'une quelconque des revendications précédentes, dans lequel la teneur en matières sèches du perméat obtenu après une ou plusieurs étapes de filtration par RO est ≤ 0,5 % en poids, spécifiquement < 0,1 % en poids.

15. Procédé selon l'une quelconque des revendications précédentes, dans lequel la COD du perméat obtenu après une ou plusieurs étapes de filtration par RO est ≤ 500 mg O₂/l, spécifiquement ≤ 150 mg O₂/l, plus spécifiquement ≤ 15 mg O₂/l.

16. Procédé selon l'une quelconque des revendications précédentes, dans lequel le rapport N/P/K du perméat obtenu après une ou plusieurs étapes de filtration par RO est de 1 à 2/0/1.

17. Dispositif pour traiter du lisier, comprenant des moyens pour mettre en œuvre le procédé de l'une quelconque des revendications 1 à 16, dans lequel les moyens comprennent
- une unité de séparateur pour séparer le lisier en une fraction sèche et une première fraction liquide,
- une ou plusieurs centrifugeuses configurées pour recevoir la première fraction liquide et pour retirer les matières solides de la première fraction liquide pour former une deuxième fraction liquide,
- une ou plusieurs unités d'osmose inverse configurées pour recevoir la deuxième fraction liquide et pour concentrer la deuxième fraction liquide.

18. Dispositif selon la revendication 17, dans lequel l'unité de séparateur est au moins l'un choisi parmi les suivants : un filtre, tel qu'un filtre à tambour ou un filtre à disques, une centrifugeuse, un tamis, et une presse à vis, spécifiquement une décanteuse centrifugeuse.

19. Dispositif selon l'une quelconque des revendications 17 et 18, lequel dispositif comprend une seule centrifugeuse pour retirer les matières solides de la première fraction liquide, et dans lequel l'unité de séparateur est une presse à vis.

20. Dispositif selon l'une quelconque des revendications 17 et 18, lequel dispositif comprend une seule centrifugeuse pour retirer les matières solides de la première fraction liquide, et dans lequel l'unité de séparateur est une centrifugeuse.

21. Dispositif selon l'une quelconque des revendications 17 à 20, lequel dispositif comprend une unité de mélange en amont de l'unité de séparateur pour former un lisier relativement homogène.

22. Dispositif selon l'une quelconque des revendications 17 à 21, dans lequel deux unités d'osmose inverse sont présentes.

23. Dispositif selon l'une quelconque des revendications 17 à 22, qui est disposé sur une base transportable, comme sur une remorque.
